# EUROPÄISCHE PATENTSCHRIFT

(11) **EP 2 586 020 B1**
(45) Veröffentlichungstag und Bekanntmachung des Hinweises auf die Patenterteilung: **09.05.2018**
(21) Anmeldenummer: 11727442.3
(22) Anmeldetag: 22.06.2011
(51) Int. Cl.: G08G 1/16, G06K 9/62, G06K 9/00

(54) **VERFAHREN UND SYSTEM ZUR INFORMATIONSVALIDIERUNG**
METHOD AND SYSTEM FOR INFORMATION VALIDATION
PROCÉDÉ ET SYSTÈME POUR LA VALIDATION D'INFORMATION

(30) Priorität: 23.06.2010 DE 102010030455
(43) Veröffentlichungstag der Anmeldung: 01.05.2013
(73) Patentinhaber: Continental Teves AG & Co. oHG, 60488 Frankfurt (DE)
(72) Erfinder: STÄHLIN, Ulrich, 65670 Eschborn (DE); GROTENDORST, Thomas, 65760 Eschborn (DE)
(74) Vertreter: Wagner, Philipp
(86) Internationale Anmeldenummer: PCT/EP2011/060474
(87) Internationale Veröffentlichungsnummer: WO 2011/161177

(56) Entgegenhaltungen:
- WO-A2-03/001474
- DE-A1-102007 048 809
- DE-A1-102009 034 214
- FR-A1- 2 896 594
- WENDER S ET AL: "3D vehicle detection using a laser scanner and a video camera", IET INTELLIGENT TRANSPORT SYSTEMS,, Bd. 2, Nr. 2, 9. Juni 2008 (2008-06-09), Seiten 105-112, XP006030986, ISSN: 1751-9578, DOI: 10.1049/IET-ITS:20070031
- GIORGIO RUSCONI ET AL: "I-WAY, intelligent co-operative system for road safety", INTELLIGENT VEHICLES SYMPOSIUM, 2007 IEEE, IEEE, PI, 1. Juni 2007 (2007-06-01), Seiten 1056-1061, XP031127086, ISBN: 978-1-4244-1067-5

## Beschreibung

Die Erfindung betrifft ein Verfahren gemäß Oberbegriff von Anspruch 1, ein System gemäß Oberbegriff von Anspruch 11 und deren Verwendung.

Während Fahrzeug-zu-X-Kommunikation (V2X-Kommunikation) gegenwärtig noch Stand der Forschung ist, sind Umfeldsensoren und darauf basierende Fahrerassistenzsysteme im Stand der Technik bereits bekannt und gewinnen zunehmend an Verbreitung. Im Zuge einer stetigen Verbesserung der Informationsverarbeitung, Informationserfassung und damit auch der Zuverlässigkeit derartiger Fahrerassistenzsysteme findet zudem eine wachsende Sensorfusion statt. So kann beispielsweise zunächst mittels eines Radarsensors eine Entfernung zu einem vorausfahrenden Fahrzeug bestimmt werden. Über eine z.B. ebenfalls vorhandene Stereokamera kann dann eine zusätzliche Abstandsmessung vorgenommen werden, welche die vom Radarsensor ermittelte Abstandsinformation bestätigt, verwirft und/oder verbessert. Sofern die Abstandsinformation bestätigt werden kann, gilt diese als validiert und zeichnet sich durch besondere Zuverlässigkeit aus.

Eine ähnliche Validierung von mittels Umfeldsensoren erfassten Informationen durch andere Umfeldsensorinformationen wird beispielsweise auch beim sog. "Target Validated Braking" eingesetzt und ist aus der DE 10 2008 061 301 A1 bekannt. Hier wird ein Radarsignal von einer Steuereinheit mittels eines Kamerasignals validiert, indem es bestätigt, dass das Radarsignal von einem Fahrzeug reflektiert wird. Eine alternative Abstandsmessung mittels einer Stereokamera ist nicht notwendig. Aufgrund der Validierung durch einen zweiten Sensor ist die Zuverlässigkeit der Information besonders hoch und erlaubt einen sicheren Eingriff in eine Fahrzeugbremsvorrichtung.

Eine noch weitergehende Fusionierung von unterschiedlichen Umfeldsensoren, wie z.B. von Radarsensoren, Kamerasensoren, Lidarsensoren und auch einem Telematiksystem, welches hier ebenfalls als Umfeldsensor verstanden wird, wird in der DE 10 2007 058 192 A1 beschrieben. Mittels eines zentralen Steuergeräts werden die jeweils nicht-redundanten Informationen eines Einzelsensors überprüft, indem sie analytisch mit Informationen eines anderen Sensors verglichen werden. Auf diese Weise kann ggf. eine Informationsredundanz hergestellt werden, welche die Basis für sicherheitsrelevante Eingriffe in die Fahrzeugsteuerung bildet.

Die DE 10 2010 002 092 A1 offenbart eine Kommunikationseinrichtung mit einer Datenvorverarbeitungseinheit zur Reduktion, Validierung und Plausibilisierung von mittels V2X-Kommunikation empfangenen Daten. Hierzu werden nicht nur Informationen von Umfeldsensoren, wie z.B. Radar und Kamera, sondern zusätzlich auch von Fahrzeugsensoren, wie z.B. ESP-Sensoren, verwendet. Zusätzlich können Informationen eines globalen Positionsbestimmungssystems hinzugezogen werden.

Die DE 10 2007 048 809 A1 beschreibt ein Verfahren, demgemäß die Signale verschiedener Umfeldsensoren gekoppelt werden, um ein Umfeldmodell zu erzeugen. Zusätzlich zu den Signalen der Umfeldsensoren werden über V2X-Kommunikation empfangene Daten in das Umfeldmodell miteinbezogen. Durch die Kombination der unterschiedlichen Sensoren untereinander bzw. der Sensoren mit dem V2X-Kommunikationssystem können die Probleme und Schwächen der einzelnen Sensoren durch die Stärken der anderen Sensoren kompensiert werden.

Aus der FR 2 896 594 A1 ist ein Verfahren zur Verifizierung und Vervollständigung von Informationen bekannt. Dabei erfasst ein erstes Fahrzeug mittels eines Umfeldsensors Informationen, die für ein zweites Fahrzeug nicht direkt erfassbar sind. Diese Informationen werden nun an ein zweites Fahrzeug übertragen, welches damit seine selbst erfassten Informationen über das Umfeld ergänzt bzw. verifiziert.

Eine Informationskopplung in Verbindung mit einer Informationsvalidierung ist bei mittels V2X-Kommunikation erfassten Informationen jedoch problembehaftet, da V2X-Kommunikation häufig im Zusammenhang mit Informationen eingesetzt wird, die von Umfeldsensoren nicht erfasst werden können. So ist es z.B. möglich, mittels V2X-Kommunikation Informationen über Objekte zu empfangen, die für den Empfänger hinter einer Kurve verborgen liegen oder von einem Hindernis verdeckt werden. Da derartige Objekte von Umfeldsensoren nicht sicher erkannt werden können, kann die entsprechende V2X-Information nicht ohne weiteres mittels Umfeldsensorik validiert werden. Ein sicherheitsrelevanter Eingriff in die Fahrzeugsteuerung auf Basis der V2X-Information ist daher häufig nicht möglich.

Der Erfindung liegt die Aufgabe zugrunde, eine von einer Fahrzeug-zu-X-Kommunikationseinrichtung erfasste Information auch in solchen Situationen mittels eines Umfeldsensors zuverlässig zu validieren, in denen der Umfeldsensor die zu validierende Information nicht sicher erfassen kann.

Diese Aufgabe wird erfindungsgemäß durch das Verfahren gemäß Anspruch 1 und das System gemäß Anspruch 11 gelöst.

Gemäß dem erfindungsgemäßen Verfahren zur Infomationsvalidierung wird eine erste Information zumindest für die Dauer ihrer Relevanz im Wesentlichen kontinuierlich von einer Fahrzeug-zu-X-Kommunikationseinrichtung erfasst und eine zweite Information wird zeitgleich zur ersten Information von mindestens einem Einzelsensor oder einem Sensorverbund erfasst. Der mindestens eine Einzelsensor oder der Sensorverbund ist mit der Fahrzeug-zu-X-Kommunikationseinrichtung auf Datenebene gekoppelt. Mittels eines Abgleichs eines Informationsinhalts der ersten und der zweiten Information wird im Falle übereinstimmenden Informationsinhalts eine Validierung der ersten und/oder zweiten Information durchgeführt. Das erfindungsgemäße Verfahren zeichnet sich dadurch aus, dass die zweite Information im Wesentlichen nicht kontinuierlich erfasst wird. Daraus ergibt sich der Vorteil, dass auch eine mittels Fahrzeug-zu-X-Kommunikation erhaltene erste Information auf einfache Weise zuverlässig validiert werden kann, obwohl sie nicht kontinuierlich mittels eines anderen Sensors oder Sensorverbunds bestätigt werden kann. Sofern die erste Information kontinuierlich erfasst wird und der Informationsinhalt der ersten Information identisch mit dem Informationsinhalt der zweiten Information ist, kann im Hinblick auf die unterschiedlichen physikalischen Eigenschaften der Erfassungsverfahren der ersten und zweiten Information mit sehr hoher Wahrscheinlichkeit davon ausgegangen werden, dass die zweite Information auch in einer Erfassungsunterbrechung oder bei Erfassungsabbruch noch gültig ist. Die Erfindung macht sich somit die Erkenntnis zu Nutzen, dass eine wiederholt oder nur einmalig kurzfristig mittels eines Einzelsensors oder eines Sensorverbunds erfassbare zweite Information im Wesentlichen auch in denjenigen Zeitspannen zutreffend ist, in denen sie auf diesem Wege nicht erfasst werden kann.

Unter dem Begriff "kontinuierliche Erfassung" wird im Zusammenhang mit der Erfindung eine über eine Vielzahl von Messzyklen und Verarbeitungszyklen ununterbrochene Erfassung einer Information mittels eines Sensors oder einer Fahrzeug-zu-X-Kommunikationseinrichtung verstanden. Unter dem Begriff "nicht kontinuierliche Erfassung" wird hingegen ein über eine Vielzahl von Messzyklen und Verarbeitungszyklen nur mit Unterbrechungen mögliches Erfassen oder aber ein nur über eine sehr geringe Anzahl von Messzyklen und Verarbeitungszyklen mögliches Erfassen einer Information verstanden.

Bevorzugt ist es vorgesehen, dass der mindestens eine Einzelsensor ein Sensor der Gattung:
- Radar,
- Lidar,
- Laserscanner,
- Ultraschall,
- Monokamera,
- Stereokamera,
- Raddrehzahlsensor,
- Beschleunigungssensor,
- Drehratensensor oder
- Lenkwinkelsensor
ist. Hierbei handelt es sich um im Kraftfahrzeugbereich typischerweise verwendete Sensorgattungen, die im Wesentlichen eine umfassende Erfassung und Erkennung des Fahrzeugumfelds und zumindest teilweise auch des Fahrzeugzustands ermöglichen. Zum gegenwärtigen Zeitpunkt ist bereits eine Vielzahl von Fahrzeugen standardmäßig mit mehreren Sensoren der genannten Gattungen ausgestattet und diese Zahl wird in Zukunft weiter zunehmen. Der zusätzliche Ausrüstungsaufwand zur Implementierung des erfindungsgemäßen Verfahrens in ein Kraftfahrzeug ist daher gering.

In einer weiteren bevorzugten Ausführungsform ist es vorgesehen, dass der Sensorverbund ein Verbund von Einzelsensoren gleicher und/oder unterschiedlicher Gattung ist. Durch die Kombination von Einzelsensoren zu einem Sensorverbund ergibt sich der Vorteil, dass Schwächen einer Sensorgattung mittels Stärken einer anderen Sensorgattung ausgeglichen werden können. Bei Kombination ausreichend vieler unterschiedlicher Sensorgattungen kann somit im Wesentlichen jederzeit ein möglichst vollständiges Fahrzeugumfeldmodell bzw. Fahrzeugzustandsmodell erstellt werden.

In einer weiteren besonders bevorzugten Ausführungsform ist es vorgesehen, dass die Informationsinhalte der Informationen der Einzelsensoren des Sensorverbunds zu einer gemeinsamen Verbundinformation fusioniert werden, wobei insbesondere die gemeinsame Verbundinformation die zweite Information darstellt. Indem die Informationsinhalte der Informationen der Einzelsensoren fusioniert werden, muss für das erfindungsgemäße Verfahren nicht mehr der Informationsinhalt jeder zweiten Einzelinformation mit dem Informationsinhalt der ersten Information abgeglichen werden. Somit wird das Verfahren beschleunigt und vereinfacht. Auch für weitere Fahrzeugsteuergeräte und Fahrerassistenzsysteme, die auf Sensorinformationen zurückgreifen, ergibt sich der Vorteil, dass nur eine einzelne Information verarbeitet werden muss, welche zudem alle wesentlichen Daten enthält.

Zweckmäßigerweise ist es vorgesehen, dass die erste und zweite Information eine Position und/oder Bewegungsrichtung und/oder Geschwindigkeit und/oder Gattung eines Objekts enthalten. Derartige Informationsinhalte sind oftmals von kritischer Bedeutung für die Fahrzeugsicherheit. Um eine Verkehrssituation richtig einschätzen zu können, braucht der Fahrer, ein entsprechendes Fahrzeugsteuergerät oder ein Fahrerassistenzsystem zunächst eine Information über die Position eines Objekts. Damit kann beispielsweise eine erste Beurteilung erfolgen, ob das Objekt eine Kollisionsgefahr darstellt. Sofern auch die Bewegungsrichtung und die Geschwindigkeit des Objekts bekannt sind, kann die Beurteilung dahingehend verbessert werden, dass mittels eines Abgleichs mit der eigenen Bewegungsrichtung und Geschwindigkeit eine evtl. Kollisionsgefahr präziser beurteilt werden kann. Schließlich ist auch die Gattung des Objekts von Bedeutung, da beispielweise die Kollision mit einem am Straßenrand geparkten Fahrzeug der mit einem Fußgänger vorzuziehen ist.

In einer weiteren bevorzugten Ausführungsform ist es vorgesehen, dass die Informationsinhalte der ersten und der zweiten Information nicht fusioniert werden. Indem eine kontinuierliche Fusion unterbleibt, ist jederzeit ein Abgleich des Informationsinhalts der ersten Information mit dem Informationsinhalt der zweiten Information möglich, auf dessen Grundlage die erste und/oder zweite Information validiert werden kann.

Zweckmäßigerweise ist es vorgesehen, dass die erste und/oder zweite Information nicht mehr als validiert eingestuft wird, wenn die erste Information nicht mehr im Wesentlichen kontinuierlich erfasst wird. Sobald die erste Information nicht mehr im Wesentlichen kontinuierlich erfasst wird, muss davon ausgegangen werden, dass der Informationsinhalt der ersten Information nicht länger gültig ist. Da zudem die zweite Information ebenfalls im Wesentlichen nicht kontinuierlich erfasst wird, liegt keine zuverlässige Information mehr vor, auf deren Basis eine Validierung möglich wäre. Somit ergibt sich der Vorteil, dass auf eine unsichere Informationslage angemessen reagiert werden kann.

Außerdem ist es vorteilhaft, dass der Informationsinhalt der validierten ersten und/oder validierten zweiten Information mindestens einem Fahrerassistenzsystem in einem Fahrzeug zur Verfügung gestellt wird. Damit wird es möglich, die validierte und ggf. sicherheitskritische Information unabhängig vom Fahrer zu nutzen. Bei dem Fahrerassistenzsystem kann es sich beispielsweise um einen Bremsassistenten handeln, der eine bevorstehende Notbremsung erkennt und das Bremsensystem durch Vorbefüllen der Bremszylinder und der zugehörigen Zuleitungen für ein schnelleres Ansprechen vorbereitet.

Gemäß einer weiteren bevorzugten Ausführungsform der Erfindung ist es vorgesehen, dass die validierte erste oder validierte zweite Information einen für einen Fahrzeugsteuereingriff ausreichend hohen Zuverlässigkeitsgrad aufweist. Somit wird ein autonomer Eingriff in die Fahrzeugsteuerung ermöglicht, der sogar zum Übersteuern einer Fahrereingabe ausgelegt sein kann. Bei einem entsprechenden Fahrzeugsteuereingriff kann es sich beispielsweise um eine autonome Vollbremsung zur Unfallvermeidung oder um ein autonomes Ausweichmanöver zur Unfallvermeidung handeln.

Bevorzugt ist es vorgesehen, dass der Informationsinhalt der ersten Information zur Reduzierung eines Schwellenwerts einer Objekterkennung genutzt wird, wobei die Objekterkennung mittels des mindestens einen Einzelsensors und/oder des Sensorverbunds vorgenommen wird. Daraus ergibt sich der Vorteil, dass eine verbesserte und beschleunigte Objekterkennung mittels des mindestens einen Einzelsensors und/oder des Sensorverbunds ermöglicht wird, da die statistische Wahrscheinlichkeit, mit welcher ein Objekt in den Sensorrohdaten erkannt werden muss, reduziert ist. Der mindestens eine Einzelsensor und/oder der Sensorverbund erhalten mittels der ersten Information eine Zielvorgabe, nach der gezielt in den Sensorrohdaten gesucht wird.

Die vorliegende Erfindung betrifft weiter ein System zur Infomationsvalidierung, welche insbesondere ein erfindungsgemäßes Verfahren ausführt. Das System umfasst eine Fahrzeug-zu-X-Kommunikationseinrichtung und mindestens einen Einzelsensor oder einen Sensorverbund, wobei die Fahrzeug-zu-X-Kommunikationseinrichtung mit dem mindestens einen Einzelsensor oder dem Sensorverbund über ein elektronisches Informationsabgleichsmodul auf Datenebene gekoppelt ist. Die Fahrzeug-zu-X-Kommunikationseinrichtung erfasst eine erste Information und gibt diese während der Dauer ihrer Erfassung an das elektronische Informationsabgleichsmodul aus, wobei die Fahrzeug-zu-X-Kommunikationseinrichtung die erste Information im Wesentlichen kontinuierlich an das elektronische Informationsabgleichsmodul ausgibt. Der mindestens eine Einzelsensor oder der Sensorverbund erfasst eine zweite Information im Wesentlichen zeitgleich zur Erfassung der ersten Information durch die Fahrzeug-zu-X-Kommunikationseinrichtung und gibt diese ebenfalls während der Dauer ihrer Erfassung an das elektronische Informationsabgleichsmodul aus. Das elektronische Informationsabgleichsmodul führt einen Softwarealgorithmus zum Abgleich des Informationsinhalts der ersten und der zweiten Information aus und validiert bei Erkennen auf übereinstimmenden Informationsinhalt die erste und/oder zweite Information. Das erfindungsgemäße System zeichnet sich dadurch aus, dass der mindestens eine Einzelsensor oder der Sensorverbund die zweite Information im Wesentlichen nicht kontinuierlich an das elektronische Informationsabgleichsmodul ausgibt. Das erfindungsgemäße System umfasst somit alle notwendigen Mittel zur Ausführung des erfindungsgemäßen Verfahrens und ermöglicht auf einfache Weise eine zuverlässige Informationsvalidierung, selbst wenn die zweite Information im Wesentlichen nicht kontinuierlich erfasst werden kann.

Es ist vorteilhaft, dass die Fahrzeug-zu-X-Kommunikationseinrichtung auf Basis mindestens einer der folgenden Verbindungsarten Informationen austauscht:
- WLAN-Verbindung, insbesondere nach IEEE 802.11,
- ISM-Verbindung (Industrial, Scientific, Medical Band),
- ZigBee,
- Bluetooth,
- UWB,
- Infrarotverbindung und/oder
- Mobilfunkverbindung.
Diese Verbindungsarten bieten dabei unterschiedliche Vor- und Nachteile, je nach Art und Wellenlänge. WLAN-Verbindungen ermöglichen z.B. eine hohe Datenübertragungsrate und einen schnellen Verbindungsaufbau. ISM-Verbindungen bieten hingegen nur eine geringere Datenübertragungsrate, sind aber hervorragend zur Datenübertragung um Sichthindernisse herum geeignet. Infrarotverbindungen wiederum bieten ebenfalls eine geringe Datenübertragungsrate. Mobilfunkverbindungen schließlich werden durch Sichthindernisse nicht beeinträchtigt und bieten eine gute Datenübertragungsrate.

Dafür ist der Verbindungsaufbau jedoch vergleichsweise langsam. Durch die Kombination und gleichzeitige bzw. parallele Nutzung mehrerer dieser Verbindungsarten ergeben sich weitere Vorteile, da so die Nachteile einzelner Verbindungsarten ausgeglichen werden können.

In einer weiteren bevorzugten Ausführungsform der Erfindung ist es vorgesehen, dass dem Sensorverbund ein elektronisches Informationsfusionsmodul zugeordnet ist, welches die Informationsinhalte der Informationen der Einzelsensoren des Sensorverbunds zu einer gemeinsamen Verbundinformation fusioniert, wobei insbesondere die gemeinsame Verbundinformation die zweite Information darstellt. Dies ergibt den Vorteil eines vereinfachten und beschleunigten Informationsabgleichs, da nicht mehr der Informationsinhalt jeder zweiten Einzelinformation mit dem Informationsinhalt der ersten Information abgeglichen werden muss. Fahrzeugsteuergeräten und Fahrerassistenzsystemen, welchen die zweite Information zur Verfügung gestellt wird, müssen zudem nur eine zweite Information verarbeiten anstelle einer Vielzahl zweiter Informationen.

Vorzugsweise zeichnet sich das System dadurch aus, dass das elektronische Informationsabgleichsmodul und das elektronische Informationsfusionsmodul teilweise oder vollständig gemeinsame Datenverarbeitungsmittel umfassen. Somit sind das Informationsabgleichsmodul und das Informationsfusionsmodul zumindest teilweise integriert, was sowohl den Herstellungsprozess vereinfacht und die Produktionskosten reduziert, als auch für eine effektive und schnelle Datenverknüpfung sorgt. Eine effektive und schnelle Datenverknüpfung ist hier besonders vorteilhaft, da das Informationsfusionsmodul und das Informationsabgleichsmodul zumindest teilweise identische Datensätze verarbeiten.

Weiterhin ist es vorteilhaft, dass das elektronische Informationsabgleichsmodul und/oder das elektronische Informationsfusionsmodul einem beliebigen Fahrzeugsteuergerät zugeordnet sind, wobei sie insbesondere teilweise oder vollständig mit einem dem Fahrzeugsteuergerät zugeordneten elektronischen Rechenmodul identisch sind. Somit ergeben sich weitere Vereinfachungspotentiale und Produktionskosteneinsparpotentiale, da auf bereits vorhandene Komponenten anderer Fahrzeugsteuergeräte zurückgegriffen werden kann. Zudem führt dies zu einer verbesserten Datenverknüpfung zwischen dem Informationsfusionsmodul und dem Informationsabgleichsmodul auf der einen Seite sowie dem entsprechenden Fahrzeugsteuergerät auf der anderen Seite.

Des Weiteren betrifft die vorliegende Erfindung eine Verwendung des Verfahrens zur Informationsvalidierung und des Systems zur Informationsvalidierung in einem Kraftfahrzeug.

Weitere bevorzugte Ausführungsformen ergeben sich aus den Unteransprüchen und der nachfolgenden Beschreibung eines Ausführungsbeispiels an Hand von Figuren.

Es zeigt
- Fig. 1a: schematisch einen möglichen Aufbau eines erfindungsgemäßen Systems,
- Fig. 1b: schematisch einen möglichen alternativen Aufbau eines erfindungsgemäßen Systems,
- Fig. 2: eine Verkehrssituation auf einer vielbefahrenen Straße, in der das erfindungsgemäße Verfahren zum Einsatz kommt und
- Fig. 3: ein Flussdiagramm, welches die einzelnen Ablaufschritte des Verfahrens zur Informationsvalidierung darstellt.

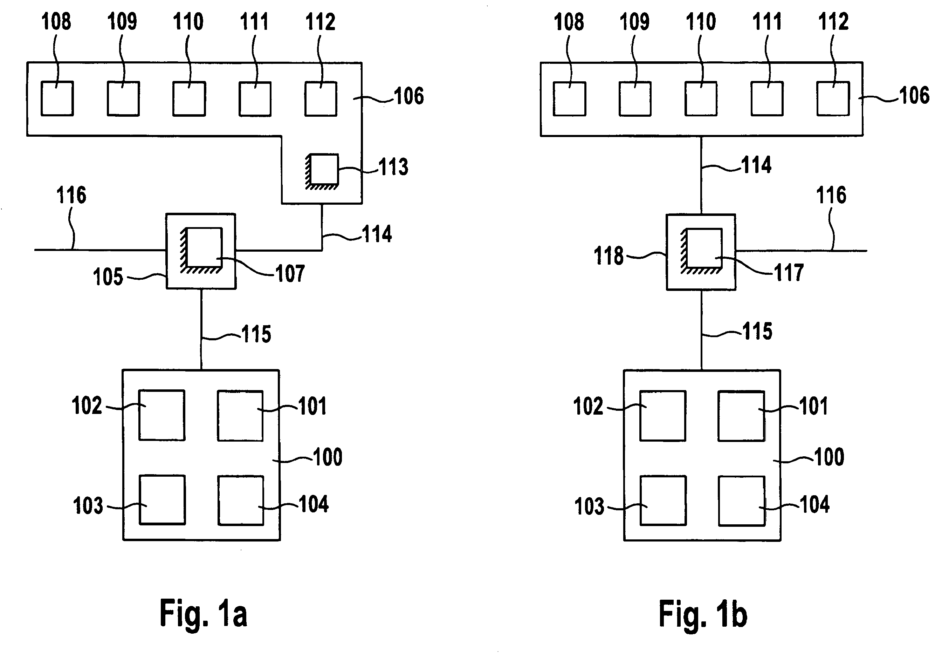

Fig. 1a zeigt schematisch und beispielhaft einen möglichen Aufbau des erfindungsgemäßen Systems zur Informationsvalidierung. Das beispielhafte System umfasst Fahrzeug-zu-X-Kommunikationseinrichtung 100, welche wiederum WLAN-Modul 101, ISM-Modul 102, Infrarotkommunikationsmodul 103 und Mobilfunkmodul 104 umfasst. WLAN-Modul 101 ist für die Kommunikation gemäß Kommunikationsstandard IEEE 802.11p ausgebildet. Mittels Modulen 101 - 104 kann Fahrzeug-zu-X-Kommunikationseinrichtung 100 somit auf unterschiedlichen Übertragungswegen Informationen mit anderen Fahrzeugen, Infrastruktureinrichtung und zentralen Datenservern austauschen. Das beispielhafte System umfasst weiter Informationsabgleichsmodul 105 und Sensorverbund 106. Sensorverbund 106 ist ein Verbund von Einzelsensoren 108 - 112 unterschiedlicher Gattung. In diesem Ausführungsbeispiel besteht Sensorverbund 106 aus Radarsensor 108, Lidarsensor 109, Ultraschallsensoren 110, Stereokamera 111 und Raddrehzahlsensoren 112. Außerdem umfasst Sensorverbund 106 Mikroprozessor 113, welcher einen Softwarealgorithmus zum Erstellen einer gemeinsamen Verbundinformation ausführt. Sensorverbund 106 ist somit ein Informationsfusionsmodul in Form von Mikroprozessor 113 zugeordnet. Der Softwarealgorithmus zum Erstellen einer gemeinsamen Verbundinformation sammelt die Informationen der zu Sensorverbund 106 zusammengeschlossenen Einzelsensoren 108 - 112, analysiert die Informationsinhalte der Informationen von Einzelsensoren 108 - 112 und erzeugt daraus eine gemeinsame Verbundinformation. Die Verbundinformation enthält den gesamten Informationsinhalt der einzelnen Informationen von Einzelsensoren 108 - 112. Über Datenleitungen 114 und 115 sind Fahrzeug-zu-X-Kommunikationseinrichtung 100 und Sensorverbund 106 mit Informationsabgleichsmodul 105 gekoppelt. Die Verbundinformationen von Sensorverbund 106 und die von Fahrzeug-zu-X-Kommunikationseinrichtung 100 erfassten Informationen werden nun an Informationsabgleichsmodul 105 ausgegeben, welches mittels Mikroprozessor 107 einen Softwarealgorithmus zum Abgleich der Informationsinhalte der Verbundinformationen und der von Fahrzeug-zu-X-Kommunikationseinrichtung 100 erfassten Informationen ausführt. Wenn Informationsabgleichsmodul 105 einen sowohl von Fahrzeug-zu-X-Kommunikationseinrichtung 100 als auch von Sensorverbund 106 beschriebenen Informationsinhalt als identisch erkennt, wird beispielsgemäß die Information von Fahrzeug-zu-X-Kommunikationseinrichtung 100 validiert. Da Fahrzeug-zu-X-Kommunikationseinrichtung 100 aufgrund der physikalischen Eigenschaften der zur Informationserfassung genutzten Wellenlängen in der Lage ist, Informationen zu erfassen, welche von Sensorverbund 106 nicht oder nur kurzfristig und undeutlich erfasst werden können, kann ein Abgleich der Informationsinhalte nicht zu jedem beliebigen Zeitpunkt stattfinden. Somit wäre auch eine Validierung der mittels Fahrzeug-zu-X-Kommunikationseinrichtung (100) erfassten Information nur für die Zeitspannen möglich, in denen die entsprechenden Verbundinformationen erfasst werden. Um in diesem Fall dennoch eine zuverlässige Validierung der von Fahrzeug-zu-X-Kommunikationseinrichtung 100 erfassten Information zu ermöglichen, wird beispielsgemäß auch ein nur kurzfristiges und undeutliches Erfassen der Verbundinformation zur Validierung der mittels Fahrzeug-zu-X-Kommunikationseinrichtung (100) erfassten Information für die Dauer des Erfassens der mittels Fahrzeug-zu-X-Kommunikationseinrichtung (100) erfassten Information zugelassen. Somit kann auch in diesem Fall eine zuverlässige Validierung der von Fahrzeug-zu-X-Kommunikationseinrichtung 100 erfassten Information durchgeführt werden, was Voraussetzung für die Weitergabe des entsprechenden Informationsinhalts über Datenleitung 116 an ein Fahrerassistenzsystem (nicht dargestellt) ist.

In einem weiteren Ausführungsbeispiel in Fig. 1a umfasst Fahrzeug-zu-X-Kommunikationseinrichtung 100 ein nicht dargestelltes Informationsfusionsmodul, welches die Informationsinhalte der mittels WLAN-Modul 101, ISM-Modul 102, Infrarotkommunikationsmodul 103 und Mobilfunkmodul 104 erfassten Informationen zu einer gemeinsamen Kommunikationsinformation fusioniert. Anschließend wird die gemeinsame Kommunikationsinformation über Datenleitung 115 an Informationsabgleichsmodul 105 ausgegeben.

Fig. 1b zeigt beispielhaft einen möglichen alternativen Aufbau des erfindungsgemäßen Systems. Im Gegensatz zu Fig. 1a umfasst Sensorverbund 106 beispielsgemäß keinen gesonderten Mikroprozessor, welche die Informationen von Einzelsensoren 108 - 112 zu einer gemeinsamen Verbundinformation fusioniert. Stattdessen werden die Informationen von Einzelsensoren 108 - 112 über Datenleitung 114 direkt an kombiniertes Informationsfusionsmodul und Informationsabgleichsmodul 118 übertragen, welches Mikroprozessor 117 umfasst. Mikroprozessor 117 ist leistungsfähiger als Mikroprozessor 107 in Fig. 1a, da er vergleichsweise mehrere Rechenoperationen pro Zeiteinheit ausführen muss. Mikroprozessor 117 fusioniert zunächst die Informationen von Einzelsensoren 108 - 112 zu einer gemeinsamen Verbundinformation und führt dann einen Abgleich des Informationsinhalts der Verbundinformation mit dem Informationsinhalt der mittels Fahrzeug-zu-X-Kommunikationseinrichtung 100 erfassten Information durch. Sofern ein übereinstimmender Informationsinhalt erkannt wird, wird die entsprechende, mittels Fahrzeug-zu-X-Kommunikationseinrichtung 100 erfasste Information validiert und über Datenleitung 116 einem Fahrerassistenzsystem zur Verfügung gestellt.

In einem weiteren Ausführungsbeispiel in Fig. 1b ist kombiniertes Informationsfusionsmodul und Informationsabgleichsmodul 118 in ein Bremsensteuergerät (nicht dargestellt) integriert. Mikroprozessor 117 führt neben Rechenoperationen zur Informationsfusion und zum Informationsabgleich beispielsgemäß Rechenoperationen zur Bremsenregelung aus.

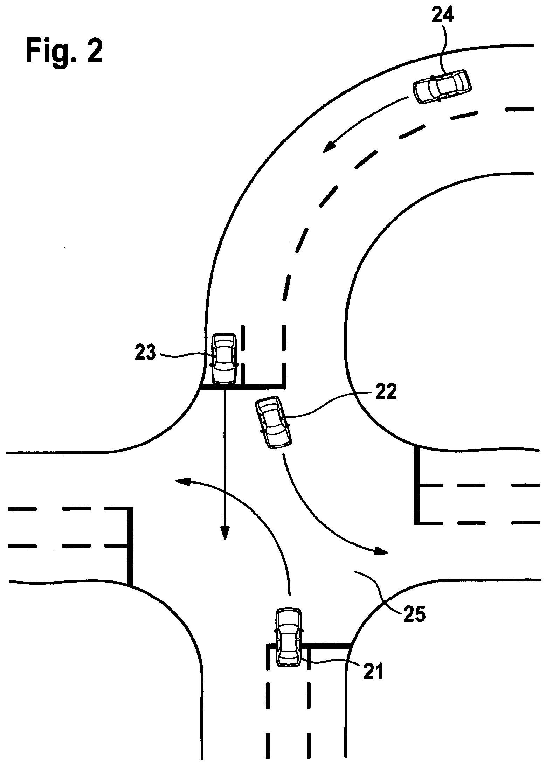

In Fig. 2 ist beispielhaft und schematisch eine Verkehrssituation mit Fahrzeugen 21, 22, 23 und 24 dargestellt, in welcher das erfindungsgemäße Verfahren zum Einsatz kommt. Die geplanten Fahrtrichtungen von Fahrzeugen 21 - 24 sind jeweils durch entsprechende Pfeile dargestellt. Fahrzeug 21 ist mit dem erfindungsgemäßen System zur Informationsvalidierung ausgestattet und plant auf Kreuzung 25 einen Linksabbiegevorgang. Durch entgegenkommendes Fahrzeug 22, das ebenfalls einen Linksabbiegevorgang plant, wird dem Fahrer von Fahrzeug 21 die Sicht auf Fahrzeug 23 versperrt, so dass er Fahrzeug 23 nicht wahrnehmen kann. Fahrzeug 23 plant, Kreuzung 25 geradlinig zu überfahren und stellt somit eine Kollisionsgefahr für Fahrzeug 21 dar. Beispielsgemäß verfügt Fahrzeug 21 über Fahrzeug-zu-X-Kommunikationsmittel auf Basis von WLAN und über einen Radarsensor. Mittels der Fahrzeug-zu-X-Kommunikationsmittel kann Fahrzeug 21 den Ort, die Bewegungsrichtung und die Geschwindigkeit von Fahrzeug 23 kontinuierlich erfassen. Der ebenfalls an Fahrzeug 21 angeordnete Radarsensor kann Fahrzeug 23 hingegen nicht kontinuierlich erfassen. Da ein geringer Anteil des von Fahrzeug 21 ausgehenden Radarsignals sich jedoch unter Fahrzeug 22 hinweg ausbreitet und so von Fahrzeug 23 reflektiert wird, kann Fahrzeug 21 mittels des Radarsensors ein unregelmäßiges und häufig unterbrochenes Radarsignal von Fahrzeug 23 empfangen. Gemäß dem erfindungsgemäßen Verfahren wird die nicht kontinuierlich vorliegende Radarinformation zur sicheren und zuverlässigen Validierung der Fahrzeug-zu-X-Information genutzt. Fahrzeug 21 verfügt somit über eine validierte Information bzgl. des Orts, der Bewegungsrichtung und der Geschwindigkeit von Fahrzeug 23. Diese Information wird sowohl als Warnung an den Fahrer ausgegeben als auch einem Bremsassistenten zur Verfügung gestellt, welcher nach Ablauf einer vom Fahrer nicht genutzten Fahrerreaktionszeitspanne einen Bremseneingriff vornimmt, um eine Kollision mit Fahrzeug 23 zu vermeiden.

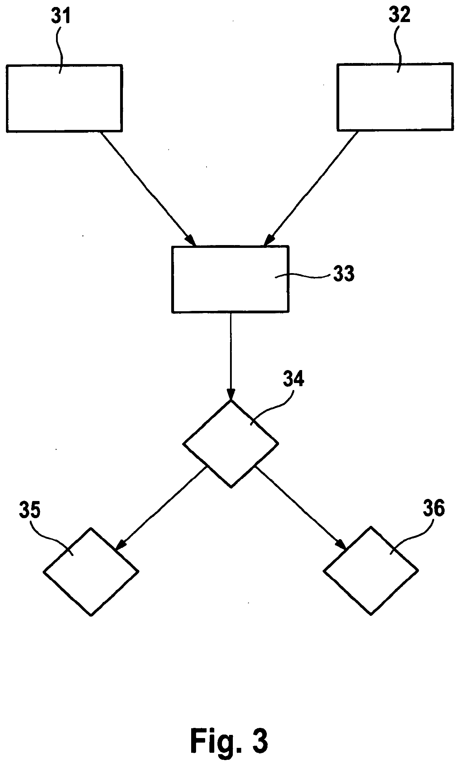

Fig. 3 zeigt beispielhaft den Ablauf des erfindungsgemäßen Verfahrens zur Informationsvalidierung anhand eines Flussdiagramms. In Schritt 31 wird eine erste Information mittels einer Fahrzeug-zu-X-Kommunikationseinrichtung kontinuierlich erfasst. Gleichzeitig wird in Schritt 32 eine zweite Information mittels eines Einzelsensors nicht kontinuierlich und unregelmäßig erfasst. In Schritt 33 wird ein Abgleich des Informationsinhalts der ersten und der zweiten Information vorgenommen. Dass die zweite Information und somit ihr Informationsinhalt nicht kontinuierlich zur Verfügung stehen, spielt beispielsgemäß keine Rolle. Der Informationsabgleich findet unabhängig von der zeitlichen Kontinuität der zweiten Information statt. Von Bedeutung ist jedoch der Umstand, dass es bei der Erfassung der ersten und der zweiten Information einen zeitlichen Überlapp geben muss. Im folgenden Schritt 34 wird nun geprüft, ob der Abgleich der Informationsinhalte der ersten und der zweiten Information eine Übereinstimmung ergab. Falls eine Übereinstimmung erkannt wurde, wird die erste und/oder zweite Information in Schritt 35 validiert. Falls keine Übereinstimmung erkannt wurde, wird in Schritt 36 keine Validierung vorgenommen.

## Patentansprüche

1. Verfahren zur Informationsvalidierung,
wobei eine erste Information zumindest für die Dauer ihrer Relevanz kontinuierlich von einer Fahrzeug-zu-X-Kommunikationseinrichtung (100) erfasst wird,
wobei eine zweite Information zeitgleich zur ersten Information von mindestens einem Einzelsensor (108 - 112) oder einem Sensorverbund (106) erfasst wird,
wobei der mindestens eine Einzelsensor (108 - 112) oder der Sensorverbund (106) mit der Fahrzeug-zu-X-Kommunikationseinrichtung (100) auf Datenebene gekoppelt ist
und wobei mittels eines Abgleichs eines Informationsinhalts der ersten und der zweiten Information im Falle übereinstimmenden Informationsinhalts eine validierung der ersten Information durchgeführt wird,
**dadurch gekennzeichnet,**
**dass** die zweite Information die erste Information nicht kontinuierlich bestätigen kann.

2. Verfahren nach Anspruch 1,
**dadurch gekennzeichnet,**
**dass** der mindestens eine Einzelsensor (108 - 112) ein Sensor der Gattung:
- Radar (108),
- Lidar (109),
- Laserscanner,
- Ultraschall (110),
- Monokamera,
- Stereokamera (111),
- Raddrehzahlsensor (112),
- Beschleunigungssensor,
- Drehratensensor oder
- Lenkwinkelsensor
ist.

3. Verfahren nach mindestens einem der Ansprüche 1 und 2,
**dadurch gekennzeichnet,**
**dass** der Sensorverbund (106) ein Verbund von Einzelsensoren (108 - 112) gleicher und/oder unterschiedlicher Gattung ist.

4. Verfahren nach Anspruch 3,
**dadurch gekennzeichnet,**
**dass** die Informationsinhalte der Informationen der Einzelsensoren (108 - 112) des Sensorverbunds (106) zu einer gemeinsamen Verbundinformation fusioniert werden, wobei insbesondere die gemeinsame Verbundinformation die zweite Information darstellt.

5. Verfahren nach mindestens einem der Ansprüche 1 bis 4,
**dadurch gekennzeichnet,**
**dass** die erste und zweite Information eine Position und/oder Bewegungsrichtung und/oder Geschwindigkeit und/oder Gattung eines Objekts enthalten.

6. Verfahren nach mindestens einem der Ansprüche 1 bis 5,
**dadurch gekennzeichnet,**
**dass** die Informationsinhalte der ersten und der zweiten Information nicht fusioniert werden.

7. Verfahren nach mindestens einem der Ansprüche 1 bis 6,
**dadurch gekennzeichnet,**
**dass** die erste und/oder zweite Information nicht mehr als validiert eingestuft wird, wenn die erste Information nicht mehr kontinuierlich erfasst wird.

8. Verfahren nach mindestens einem der Ansprüche 1 bis 7,
**dadurch gekennzeichnet,**
**dass** der Informationsinhalt der validierten ersten und/oder validierten zweiten Information mindestens einem Fahrerassistenzsystem in einem Fahrzeug zur Verfügung gestellt wird.

9. Verfahren nach mindestens einem der Ansprüche 1 bis 8,
**dadurch gekennzeichnet,**
**dass** die validierte erste oder validierte zweite Information einen für einen Fahrzeugsteuereingriff ausreichend hohen Zuverlässigkeitsgrad aufweist.

10. Verfahren nach mindestens einem der Ansprüche 1 bis 9,
**dadurch gekennzeichnet,**
**dass** der Informationsinhalt der ersten Information zur Reduzierung eines Schwellenwerts einer Objekterkennung genutzt wird, wobei die Objekterkennung mittels des mindestens einen Einzelsensors (108 - 112) und/oder des Sensorverbunds (106) vorgenommen wird.

11. System zur Informationsvalidierung,
insbesondere zur Ausführung des Verfahrens nach mindestens einem der Ansprüche 1 bis 10,
umfassend eine Fahrzeug-zu-X-Kommunikationseinrichtung (100) und mindestens einen Einzelsensor (108 - 112) oder einen Sensorverbund (106),
wobei die Fahrzeug-zu-X-Kommunikationseinrichtung (100) mit dem mindestens einen Einzelsensor (108 - 112) oder dem Sensorverbund (106) über ein elektronisches Informationsabgleichsmodul (105) auf Datenebene gekoppelt ist,
wobei die Fahrzeug-zu-X-Kommunikationseinrichtung (100) eine erste Information erfasst und während der Dauer ihrer Erfassung an das elektronische Informationsabgleichsmodul (105) ausgibt,
wobei die Fahrzeug-zu-X-Kommunikationseinrichtung (100) die erste Information im Wesentlichen kontinuierlich an das elektronische Informationsabgleichsmodul (105) ausgibt,
wobei der mindestens eine Einzelsensor (108 - 112) oder der Sensorverbund (106) eine zweite Information zeitgleich zur Erfassung der ersten Information durch die Fahrzeug-zu-X-Kommunikationseinrichtung (100) erfasst und während der Dauer ihrer Erfassung an das elektronische Informationsabgleichsmodul (105) ausgibt
und wobei das elektronische Informationsabgleichsmodul (105) einen Softwarealgorithmus zum Abgleich des Informationsinhalts der ersten und der zweiten Information ausführt
und bei Erkennen auf übereinstimmenden Informationsinhalt die erste und/oder zweite Information validiert,
**dadurch gekennzeichnet,**
**dass** das Informationsabgleichsmodul (105) derart ausgebildet ist, dass es die erste Information auch dann validiert, wenn die zweite Information die erste Information nicht kontinuierlich bestätigen kann.

12. System nach Anspruch 11,
**dadurch gekennzeichnet,**
**dass** die Fahrzeug-zu-X-Kommunikationseinrichtung (100) auf Basis mindestens einer der folgenden Verbindungsarten Informationen austauscht:
- WLAN-Verbindung, insbesondere nach IEEE 802.11,
- ISM-Verbindung (Industrial, Scientific, Medical Band),
- ZigBee,
- Bluetooth,
- UWB,
- Infrarotverbindung und/oder
- Mobilfunkverbindung.

13. System nach mindestens einem der Ansprüche 11 und 12,
**dadurch gekennzeichnet,**
**dass** dem Sensorverbund (106) ein elektronisches Informationsfusionsmodul (113) zugeordnet ist, welches die Informationsinhalte der Informationen der Einzelsonsoren (108 - 112) des Sensorverbunds (106) zu einer gemeinsamen Verbundinformation fusioniert, wobei insbesondere die gemeinsame Verbundinformation die zweite Information darstellt.

14. System nach mindestens einem der Ansprüche 11 bis 13,
**dadurch gekennzeichnet,**
**dass** das elektronische Informationsabgleichsmodul (105) und das elektronische Informationsfusionsmodul (113) teilweise oder vollständig gemeinsame Datenverarbeitungsmittel (117) umfassen.

15. System nach mindestens einem der Ansprüche 11 bis 14,
**dadurch gekennzeichnet,**
**dass** das elektronische Informationsabgleichsmodul (105) und/oder das elektronische Informationsfusionsmodul (113) einem beliebigen Fahrzeugsteuergerät zugeordnet sind, wobei sie insbesondere teilweise oder vollständig mit einem dem Fahrzeugsteuergerät zugeordneten elektronischen Rechenmodul identisch sind.

16. Verwendung des Verfahrens nach mindestens einem der Ansprüche 1 bis 10 und des Systems nach mindestens einem der Ansprüche 11 bis 15 in einem Kraftfahrzeug.

## Claims

1. A method for information validation,
wherein a first information item is detected continuously, at least for the duration of its relevance, by a vehicle-to-X communication device (100),
wherein a second information item is detected at the same time as the first information item by at least one individual sensor (108 - 112) or a group of sensors (106),
wherein the at least one individual sensor (108 - 112) or
the group of sensors (106) is coupled at the data level to
the vehicle-to-X communication device (100),
and wherein the first information item is validated by reconciling information content of the first and second information items in the case of corresponding information content, **characterized in that**
the second information item cannot continually confirm the first information item.

2. The method according to Claim 1,
**characterized in that** the at least one individual sensor (108 - 112) is a sensor of the generic type:
- radar (108),
- lidar (109),
- laser scanner,
- ultrasound sensor (110),
- mono camera,
- stereo camera (111),
- wheel speed sensor (112).
- acceleration sensor,
- rotational speed sensor, or
- steering angle sensor.

3. The method according to at least one of Claims 1 and 2,
**characterized in that**
the group of sensors (106) is a group of individual sensors (108 - 112) of the same generic type and/or of different generic types.

4. The method according to Claim 3,
**characterized in that**
the information contents of the information items of the individual sensors (108 - 112) of the group of sensors (106) are merged to form a common composite information item, wherein, in particular, the common composite information item constitutes the second information item.

5. The method according to at least one of Claims 1 to 4,
**characterized in that**
the first and second information items contain a position and/or direction of movement and/or speed and/or generic type of an object.

6. The method according to at least one of Claims 1 to 5,
**characterized in that**
the information contents of the first and second information items are not merged.

7. The method according to at least one of Claims 1 to 6,
**characterized in that**
the first and/or second information items are no longer categorized as being validated if the first information item is no longer detected continuously.

8. The method according to at least one of Claims 1 to 7,
**characterized in that**
the information content of the validated first information item and/or the validated second information item is made available at least to a driver assistance system in a vehicle.

9. The method according to at least one of Claims 1 to 8,
**characterized in that**
the validated first information item or the validated second information item has a sufficiently high degree of reliability for a vehicle control intervention.

10. The method according to at least one of Claims 1 to 9,
**characterized in that**
the information content of the first information item is used to reduce a threshold value of an object detection process, wherein the object detection process is performed by means of the at least one individual sensor (108 - 112) and/or the group of sensors (106).

11. A system for information validation, in particular for carrying out the method according to at least one of Claims 1 to 10, comprising a vehicle-to-X communication device (100) and at least one individual sensor (108 - 112) or a group of sensors (106),
wherein the vehicle-to-X communication device (100) is coupled at the data level to the at least one individual sensor (108 - 112) or to the group of sensors (106) via an electronic information reconciling module (105),
wherein the vehicle-to-X communication device (100) detects a first information item, and while it is detecting said information item it outputs it to the electronic information reconciling module (105),
wherein the vehicle-to-X communication device (100) outputs the first information item essentially continuously to the electronic information reconciling module (105),
wherein the at least one individual sensor (108 - 112) or the group of sensors (106) detects a second information item at the same time as the detection of the first information item by the vehicle-to-X communication device (100), and while it is detecting said information item it outputs it to the electronic information reconciling module (105),
and wherein the electronic information reconciling module (105) carries out a software algorithm for reconciling the information content of the first and second information items, and when corresponding information content is detected it validates the first and/or the second information item,
**characterized in that**
the information reconciling module (105) is configured in such a manner that it validates the first information item even if the second information item cannot continually confirm the first information item.

12. The system according to Claim 11,
**characterized in that**
the vehicle-to-X communication device (100) exchanges information on the basis of at least one of the following types of link:
- WLAN link, in particular in accordance with IEEE 802.11,
- ISM link (Industrial, Scientific, Medical Band),
- ZigBee,
- Bluetooth,
- UWB,
- Infrared link, and/or
- Mobile radio link.

13. The system according to at least one of Claims 11 and 12,
**characterized in that** an electronic information merging module (113) is assigned to the group of sensors (106), which electronic information merging module merges the information contents of the information items of the individual sensors (108 - 112) of the group of sensors (106) to form a common composite information item, wherein the common composite information item in particular constitutes the second information item.

14. The system according to at least one of Claims 11 to 13,
**characterized in that**
the electronic information reconciling module (105) and the electronic information merging module (113) partially or completely comprise common data processing means (117).

15. The system according to at least one of Claims 11 to 14,
**characterized in that**
the electronic information reconciling module (105) and/or the electronic information merging module (113) is/are assigned to any desired vehicle control unit, wherein they are, in particular, partially or completely identical to an electronic computing module which is assigned to the vehicle control unit.

16. The use of the method according to at least one of Claims 1 to 10 and of the system according to at least one of Claims 11 to 15 in a motor vehicle.

## Revendications

1. Procédé pour la validation d'informations,
une première information étant enregistrée de façon continue par une installation de communication de véhicule à X (100), au moins pour la durée de sa pertinence,
une deuxième information étant enregistrée simultanément à la première information par au moins un capteur individuel (108-112) ou par un groupement de capteurs (106),
l'au moins un capteur individuel (108-112) ou le groupement de capteurs (106) étant couplés à l'installation de communication de véhicule à X (100) au niveau des données,
et
une validation de la première information étant effectuée au moyen d'une comparaison entre le contenu d'information de la première et de la deuxième informations dans le cas de la correspondance des contenus d'information, **caractérisé en ce que**
la deuxième information ne peut pas confirmer la première information de façon continue.

2. Procédé selon la revendication 1,
**caractérisé en ce que**
l'au moins un capteur individuel (108-112) est un capteur du type :
- radar (108),
- lidar (109,
- scanner laser,
- ultrasons (110),
- caméra mono,
- caméra stéréo (111),
- capteur de vitesse de rotation de roue (112),
- capteur de vitesse de rotation ou
- capteur d'angle de braquage

3. Procédé selon au moins l'une des revendications 1 et 2,
**caractérisé en ce que**
le groupement de capteurs (106) est un groupement de capteurs individuels (108-112) de même type et/ou de types différents.

4. Procédé selon la revendication 3,
**caractérisé en ce que**
les contenus d'information des informations des capteurs individuels (108-112) du groupement de capteurs (106) sont fusionnés en une information de groupement commune, l'information de groupement commune représentant en particulier la deuxième information.

5. Procédé selon au moins l'une des revendications 1 à 4,
**caractérisé en ce que**
la première et la deuxième informations contiennent une position et/ou une direction de mouvement et/ou une vitesse et/ou un type d'un objet.

6. Procédé selon au moins l'une des revendications 1 à 5,
**caractérisé en ce que**
les contenus d'information de la première et de la deuxième informations ne sont pas fusionnés.

7. Procédé selon au moins l'une des revendications 1 à 6,
**caractérisé en ce que**
la première et/ou la deuxième informations ne sont pas classées comme validées lorsque la première information n'est plus enregistrée de façon continue.

8. Procédé selon au moins l'une des revendications 1 à 7,
**caractérisé en ce que**
le contenu d'information de la première information validée et/ou de la deuxième information validée est mis à disposition d'au moins un système d'assistance à la conduite dans un véhicule.

9. Procédé selon au moins l'une des revendications 1 à 8,
**caractérisé en ce que**
la première information validée ou la deuxième information validée présentent un degré de fiabilité suffisamment élevé pour une intervention de commande du véhicule.

10. Procédé selon au moins l'une des revendications 1 à 9,
**caractérisé en ce que**
le contenu d'information de la première information est utilisé pour la réduction d'une valeur seuil d'une détection d'objet, la détection d'objet étant effectuée au moyen d'au moins un capteur individuel (108-112) et/ou du groupement de capteurs (106).

11. Système pour la validation d'information,
en particulier pour l'exécution du procédé selon au moins l'une des revendications 1 à 10,
comprenant une installation de communication de véhicule à X (100) et au moins un capteur individuel (108-112) ou un groupement de capteurs (106),
l'installation de communication de véhicule à X (100) étant couplée au niveau des données avec l'au moins un capteur individuel (108-112) ou avec le groupement de capteurs (106) par un module de comparaison d'informations électronique (105),
l'installation de communication de véhicule à X (100) enregistrant une première information et l'envoyant au module de comparaison d'informations électronique (105) pendant la durée de son enregistrement,
l'installation de communication de véhicule à X (100) envoyant la première information au module de comparaison d'informations électronique (105) essentiellement de façon continue,
l'au moins un capteur individuel (108-112) ou le groupement de capteurs (106) enregistrant une deuxième information simultanément à l'enregistrement de la première information par l'installation de communication de véhicule à X (100) et l'envoyant au module de comparaison d'informations électronique (105) pendant la durée de son enregistrement et le module de comparaison d'informations électronique (105) exécutant un algorithme informatique pour la comparaison du contenu d'information de la première et de la deuxième informations et validant la première et/ou la deuxième informations en cas de détection d'une correspondance de contenu des informations,
**caractérisé en ce que**
le module de comparaison d'informations (105) est conçu de telle sorte que la première information est également validée lorsque la deuxième information ne peut pas confirmer la première information de façon continue.

12. Système selon la revendication 11,
**caractérisé en ce que**
l'installation de communication de véhicule à X (100) échange des informations sur la base d'au moins un des modes de connexion suivants :
- connexion WLAN, en particulier conformément à IEEE 802.11,
- connexion ISM (bandes industrielle, scientifique, médicale),
- ZigBee,
- Bluetooth,
- ULB,
- connexion infrarouge et/ou
- connexion par téléphonie mobile.

13. Procédé selon au moins l'une des revendications 11 et 12,
**caractérisé en ce qu'**
un module de fusion d'informations électronique (113) est attribué au groupement de capteurs (106), lequel module fusionne les contenus d'information des informations des capteurs individuels (108-112) du groupement de capteurs (106) en une information de groupement commune, l'information de groupement commune représentant en particulier la deuxième information.

14. Système selon au moins l'une des revendications 11 à 13,
**caractérisé en ce que**
le module de comparaison d'informations électronique (105) et le module de fusion d'informations électronique (113) comprennent des moyens de traitement des données (117) partiellement ou totalement communs.

15. Système selon au moins l'une des revendications 11 à 14,
**caractérisé en ce que**
le module de comparaison d'informations électronique (105) et/ou le module de fusion d'informations électronique (113) sont attribués à un appareil de commande de véhicule quelconque, étant identiques en particulier partiellement ou totalement à un module de calcul électronique attribué à l'appareil de commande de véhicule.

16. Utilisation du procédé selon au moins l'une des revendications 1 à 10 et du système selon au moins une des revendications 11 à 15 dans un véhicule.
